(19) Europäisches Patentamt
European Patent Office
Office européen des brevets

(11) **EP 4 778 432 A1**

(12) **EUROPEAN PATENT APPLICATION**

(43) Date of publication:
**22.07.2026 Bulletin 2026/30**

(21) Application number: **26151029.1**

(22) Date of filing: **09.01.2026**

(51) International Patent Classification (IPC):
**A47J 31/60** (2006.01)

(52) Cooperative Patent Classification (CPC):
**A47J 31/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.01.2025 CN 202510097031**

(71) Applicant: **Kalerm Technology (Suzhou) Co., Ltd Suzhou Jiangsu 215134 (CN)**

(72) Inventors:
• YU, Ningchao
  Suzhou, Jiangsu 215134 (CN)
• XIN, Dongliang
  Suzhou, Jiangsu 215134 (CN)
• GAO, Mingxing
  Suzhou, Jiangsu 215134 (CN)

(74) Representative: **Winter, Brandl - Partnerschaft mbB**
**Alois-Steinecker-Straße 22**
**85354 Freising (DE)**

(54) **METHOD FOR DESCALING A BEVERAGE MACHINE AND BEVERAGE MACHINE**

(57) The present application provides a method for descaling a beverage machine and a beverage machine, relating to the field of beverage preparation technology. A specific implementation solution is: obtaining water quality parameters of the water inside a beverage machine, the water quality parameters are automatically obtained; determining a remaining water usage amount based on the water quality parameters and preset descaling rules, wherein the preset descaling rules indicate at least one of the following two mapping relationships: a mapping relationship between multiple water quality parameters and multiple remaining water usage amounts, and a mapping relationship between multiple water quality change conditions and multiple remaining water usage amount determination manners; and executing a descaling operation when the remaining water usage amount reaches zero. Based on the present solution, the accuracy of a timing for initiating the descaling operation is improved, thereby improving the descaling effect of the beverage machine and enhancing the user experience.

obtaining a water quality parameter of the water inside the beverage machine, wherein the water quality parameter is automatically obtained — S110

determining a remaining water usage amount based on the water quality parameter and a preset descaling rule, wherein the preset descaling rule indicates at least one of the following two mapping relationships:
a mapping relationship between a plurality of water quality parameters and a plurality of remaining water usage amounts; and
a mapping relationship between a plurality of water quality change conditions and a plurality of remaining water usage amount determination manners — S120

executing a descaling operation when the remaining water usage amount reaches zero — S130

FIG. 1

EP 4 778 432 A1

## Description

## TECHNICAL FIELD

The present application relates to the field of beverage preparation technology, and specifically, the present application relates to a method for descaling a beverage machine and a beverage machine.

## BACKGROUND

A water source is connected to a beverage machine to prepare beverages. During the operation of the beverage machine, limescale will form in a pipe and on an inner wall of a component through which water flows in a main body of the beverage machine, and an excessive accumulation of limescale affects the normal operation of the beverage machine. For example, taking a beverage machine with a milk foam preparation function as an example, such a beverage machine is provided with a heater to generate steam. If excessive limescale accumulates in the heater, a blockage of a pipeline inside the heater may be caused, affecting the amount of steam generated, and when the blockage is severe, insufficient steam may cause milk foam to splatter.

Currently, a beverage machine generally removes limescale through a descaling operation to maintain a normal operation of the beverage machine. A timing for initiating the descaling operation is of great significance for the descaling control of the beverage machine. If the timing for initiating the descaling operation is too early, a descaling frequency is too high, causing an additional waste of a resource. If the descaling operation is started too late, a massive accumulation of the limescale is easily caused. Therefore, how to accurately determine the timing for initiating the descaling operation has become an important technical problem.

## SUMMARY

The present application provides a method for descaling a beverage machine and a beverage machine, aiming to solve at least one of the above technical defects. Technical solutions provided by the present application are as follows.

In a first aspect, an embodiment of the present application provides a method for descaling a beverage machine, the method including: obtaining a water quality parameter of the water inside the beverage machine, wherein the water quality parameter is automatically obtained; determining a remaining water usage amount based on the water quality parameter and a preset descaling rule, wherein the preset descaling rule indicates at least one of the following two mapping relationships: a mapping relationship between a plurality of water quality parameters and a plurality of remaining water usage amounts, and a mapping relationship between a plurality of water quality change conditions and a plurality of remaining water usage amount determination manners; and executing a descaling operation when the remaining water usage amount reaches zero.

In a second aspect, an embodiment of the present application provides a beverage machine, the beverage machine including: a detection device, configured to automatically obtain a water quality parameter of the water inside the beverage machine; and

a controller, in a communication connection with the detection device, wherein the controller is configured to execute the above method for descaling a beverage machine.

Beneficial effects brought by technical solutions provided by embodiments of the present application are as follows.

The method provided by an embodiment of the present application determines a remaining water usage amount by automatically obtaining a water quality parameter of the water inside a beverage machine, based on the water quality parameter and a preset descaling rule, and executes a descaling operation when the remaining water usage amount is exhausted. In the present solution, based on the preset descaling rule, the remaining water usage amount is determined according to at least one of the water quality parameter and the water quality change condition, making the determined remaining water usage amount more accurate, and by setting an exhaustion of the remaining water usage amount as a timing for initiating the descaling operation, an accuracy of the timing is improved, thereby improving a descaling effect of the beverage machine and enhancing a user experience.

## BRIEF DESCRIPTION OF THE DRAWINGS

In order to more clearly illustrate technical solutions in embodiments of the present application, drawings required for use in a description of the embodiments of the present application will be briefly introduced below.

FIG. 1 is a flow schematic diagram of a method for descaling a beverage machine provided by an embodiment of the present application;
FIG. 2 is a water path diagram inside a beverage machine provided by an embodiment of the present application;
FIG. 3 is another water path diagram inside a beverage machine provided by an embodiment of the present application; and
FIG. 4 is yet another water path diagram inside a beverage machine provided by an embodiment of the present application.

## DETAILED DESCRIPTION

Technical solutions in embodiments of the present application will be clearly and completely described below in conjunction with drawings in the embodiments of the present application. Obviously, the described embodiments are only part of embodiments of the present application, rather than all of the embodiments. Based on the embodiments in the present application, all other embodiments obtained by a person of ordinary skill in the art fall within the protection scope of the present application.

Terms used in embodiments of the present application are only for a purpose of describing a specific embodiment, and are not intended to limit the present application. The singular forms "a", "the" and "said" used in the embodiments of the present application and the appended claims are also intended to include plural forms, unless a context clearly indicates other meanings.

Depending on the context, as used herein, the word "if" may be interpreted as "when" or "upon" or "in response to determining" or "in response to detecting". Similarly, depending on the context, the phrase "if it is determined" or "if (a stated condition or event) is detected" may be interpreted as "when it is determined" or "in response to determining" or "when (the stated condition or event) is detected" or "in response to detecting (the stated condition or event)".

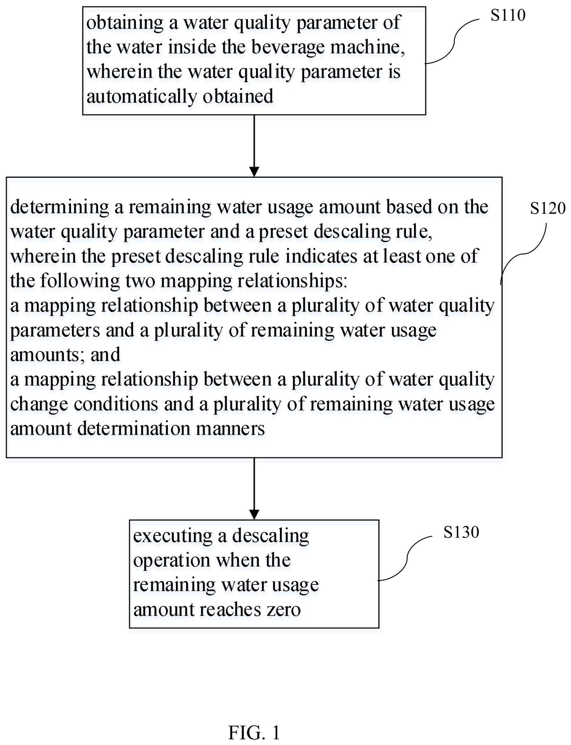

FIG. 1 shows a flow schematic of a method for descaling a beverage machine provided by an embodiment of the present application. As shown in FIG. 1, the method may mainly include:

Step S110: obtaining a water quality parameter of the water inside the beverage machine, wherein the water quality parameter is automatically obtained;

Step S120: determining a remaining water usage amount based on the water quality parameter and a preset descaling rule, wherein the preset descaling rule indicates at least one of the following two mapping relationships:

a mapping relationship between a plurality of water quality parameters and a plurality of remaining water usage amounts; and
a mapping relationship between a plurality of water quality change conditions and a plurality of remaining water usage amount determination manners;

Step S130: executing a descaling operation when the remaining water usage amount reaches zero.

Wherein, the water quality parameter is configured to indicate the water quality condition of the water inside the beverage machine, and the water quality condition is capable of affecting a formation speed of the limescale inside the beverage machine, therefore a frequency control of descaling may be performed based on the water quality parameter.

In the present embodiment, based on a preset descaling rule, the remaining water usage amount is capable of being determined according to at least one of the water quality parameter and the water quality change condition, making the determined remaining water usage amount more accurate, and by setting an exhaustion of the remaining water usage amount as a timing for initiating a descaling operation, the accuracy of the timing is improved, thereby improving the descaling effect of the beverage machine and enhancing the user experience.

In an embodiment of the present application, the water quality parameter is automatically obtained, specifically, the beverage machine may include a built-in detection device 230, and the detection device 230 is configured to automatically detect the water quality parameter of the water inside the beverage machine.

As an example, a water quality detection cycle may be set, to periodically control the detection device 230 to automatically detect the water quality parameter of the water inside the beverage machine.

The remaining water usage amount refers to the quantity of water that the beverage machine is capable of using before a next descaling operation. As the water inside the beverage machine is consumed, the accumulated limescale inside the beverage machine will increase. When the remaining water usage amount is exhausted, this indicates that a certain amount of limescale has accumulated inside the beverage machine. At this time, the descaling operation may be executed to remove the limescale inside the beverage machine, so as to maintain a normal operation of the beverage machine. The remaining water usage amount is varied depending on the beverage machine's water consumption and/or changes in the water quality parameters of the water inside the beverage machine.

In an embodiment of the present application, the exhaustion of a remaining water usage amount may be configured as a timing for initiating the descaling operation, so as to timely remove the limescale.

In an embodiment of the present application, a preset descaling rule may be set, and based on the preset descaling rule and the water quality parameter, the remaining water usage amount is determined.

As an optional manner, the preset descaling rule indicates the mapping relationship between the plurality of water quality parameters and the plurality of remaining water usage amounts.

Wherein, the water quality parameter and the remaining water usage amount have a predetermined correlation, therefore a corresponding remaining water usage amount may be respectively set for a different water quality parameter.

For example, after each descaling operation is completed, acquiring the water quality parameter of the water inside a beverage machine, the corresponding remaining water usage amount is determined based on the water quality parameter, and then a next descaling operation is performed when the remaining water usage amount is exhausted.

As another optional manner, the preset descaling rule indicates the mapping relationship between the plurality of water quality change conditions and the plurality of remaining water usage amount determination manners.

Wherein, the water quality change condition may be reflected by the change of the water quality parameter. The water quality change will affect the generation speed of the limescale, therefore, the remaining water usage amount may be determined according to the water quality change condition.

By setting the mapping relationship between the plurality of water quality change conditions and the plurality of remaining water usage amount determination manners in the preset descaling rule, when the water quality change condition exists, a remaining water usage amount determination manner corresponding to the water quality change condition is capable of being adopted to re-determine the remaining water usage amount, thereby controlling the descaling operation based on the re-determined remaining water usage amount.

The method provided by the embodiment of the present application, determines the remaining water usage amount by automatically obtaining the water quality parameter of the water inside the beverage machine, based on the water quality parameter and the preset descaling rule, and executes the descaling operation when the remaining water usage amount is exhausted. In the present solution, based on the preset descaling rule, the remaining water usage amount is capable of being determined according to at least one of the water quality parameter and the water quality change condition, making the determined remaining water usage amount more accurate, and by setting the exhaustion of the remaining water usage amount as the timing for initiating the descaling operation, the accuracy of the timing is improved, and the high-frequency execution of the descaling operation is also capable of being avoided, which both improves the descaling effect of the beverage machine and enhances user experience.

In an optional manner of an embodiment of the present application, a predetermined mapping relationship is established between a plurality of parameter values of the water quality parameter and a plurality of target water amounts; and the mapping relationship between the plurality of water quality change conditions and the plurality of remaining water usage amount determination manners includes:

in response to the water quality change condition being that the water quality parameter changes from a first parameter value to a second parameter value, a corresponding remaining water usage amount determination manner is: determining the remaining water usage amount based on a target water amount corresponding to the second parameter value; wherein, when the first parameter value indicates a more favorable water quality than a water quality indicated by the second parameter value, the target water amount corresponding to the second parameter value is less than the target water amount corresponding to the first parameter value.

Wherein, under conditions where the water quality parameter does not change, the target water amount may be understood as an initial remaining water usage amount corresponding to each water quality parameter, which is the remaining water usage amount when the cumulative water usage after a previous descaling operation is zero.

It may be understood that, the formation speed of the limescale in a case of better water quality will be slower than a formation speed of the limescale in a case of poorer water quality, therefore, when a degree of the accumulation of the limescale reaches a condition that needs to be removed, a usage amount of water with the better water quality required will be greater than a usage amount of water with the poorer water quality. Therefore, in the mapping relationship between the parameter value of the water quality parameter and the target water amount, the target water amount corresponding to the water quality parameter indicating the better water quality may be specified to be higher than the target water amount corresponding to the water quality parameter indicating the poorer water quality.

For example, the water quality parameter is configured as water hardness, when the water hardness is in a range of 1-5, the corresponding target water amount is set to 1200L. When the water hardness is in a range of 6-10, the corresponding target water amount is set to 900L.

As an example, considering that when the variation range of the water quality parameter is small, the formation speed of the limescale may not be significantly affected, in a mapping relationship between the parameter value of the plurality of water quality parameters and the target water amount, water quality parameter values within a numerical range may be specified to correspond to the same target water amount. Referring to the foregoing example, when the water hardness is in a range of 1-5, a corresponding target water amount is set to 1200L. The size of the numerical range may be configured according to actual need, and the size may indicate a maximum value of the foregoing variation range of the water quality parameter. Thus, the remaining water usage amount in the present embodiment may withstand a change of the water quality parameter within a certain range without being updated, thereby being capable of avoiding an additional consumption of computing power caused by a too frequent calculation of the remaining water usage amount.

In an embodiment of the present application, the first parameter value indicates the water quality is more favorable than the water quality indicated by the second parameter value, and the water quality parameter changes from the first parameter value to the second parameter value, that is, the water quality has undergone a change from a better water quality to a poorer water quality, and a generation speed of the limescale will increase after the water quality change. To address an increase in limescale generation speed due to a change from better water quality to poorer water quality, a remaining water usage amount may be determined based on the target water amount corresponding to the second parameter value, that is, the remaining water usage amount is re-determined based on the target water amount in a case of the poorer water quality.

It may be understood that, after the water quality change condition is that the water quality parameter changes from the first parameter value to the second parameter value, the remaining water usage amount re-determined based on the corresponding remaining water usage amount determination manner will be less than the remaining water usage amount before the water quality change, thereby advancing a timing for initiating the descaling operation, effectively addressing a situation where the generation speed of the limescale increases, improving the descaling effect, and avoiding an adverse effect caused by a blockage of the limescale in a device such as a heater 220.

In an optional manner of an embodiment of the present application, determining the remaining water usage amount based on the target water amount corresponding to the second parameter value includes:

obtaining a cumulative water usage after a previous descaling operation; and
determining the remaining water usage amount based on the target water amount corresponding to the second parameter value, and the cumulative water usage.

In an embodiment of the present application, the cumulative water usage after the previous descaling operation indicates a total water usage from the completion of the previous descaling operation to before the water quality parameter changes from the first parameter value to the second parameter value.

As an example, the target water amount corresponding to the second parameter value may be subtracted by the cumulative water usage after the previous descaling operation, and a resulting water amount is used as the remaining water usage amount.

For example, the first parameter value is a hardness value of 8, the target water amount corresponding to the first parameter value is 900L, if the water quality parameter remains at the first parameter value, then as the water is consumed, the remaining water usage amount gradually decreases from 900L, and when the remaining water usage amount reaches 0, the descaling operation is performed. The second parameter value is a hardness value of 18, the target water amount corresponding to the second parameter value is 450L. If the water quality parameter remains at the second parameter value, then as the water is consumed, the remaining water usage amount gradually decreases from 450L, and when the remaining water usage amount reaches 0, the descaling operation is performed.

Continuing the above example, if the cumulative water usage after the previous descaling operation is 200L, after switching from the first parameter value to the second parameter value, the target water amount of 450L corresponding to the second parameter value may be subtracted by the cumulative water usage of 200L to obtain the remaining water usage amount of 250L, and if no subsequent water quality change occurs, then the descaling operation may be performed after the remaining water usage amount of 250L is exhausted.

In an embodiment of the present application, the beverage machine may include a built-in flow meter 224, for calculating a water amount flowing into a main body, for example, calculating a remaining water usage amount.

In an optional manner of an embodiment of the present application, a predetermined mapping relationship is established between a plurality of parameter values of the water quality parameter and a plurality of target water amounts; and the mapping relationship between the plurality of water quality change conditions and the plurality of remaining water usage amount determination manners includes:

in response to a water quality change condition being that the water quality parameter changes from a third parameter value to a fourth parameter value, a corresponding remaining water usage amount determination manner is: determining the remaining water usage amount based on a ratio between a cumulative water usage after a previous descaling operation and the target water amount corresponding to the third parameter value;
wherein, the fourth parameter value indicates a more favorable water quality than a water quality indicated by the third parameter value, the target water amount corresponding to the fourth parameter value is greater than the target water amount corresponding to the third parameter value.

Wherein, the fourth parameter value indicates a more favorable water quality than a water quality indicated by a third parameter value, the water quality parameter changes from the third parameter value to the fourth parameter value, that is, a water quality has undergone a change from a poorer water quality to a better water quality, and a generation speed of the limescale will decrease after the water quality change. At this time, the limescale accumulation condition before the water quality parameter changes from the third parameter value to the fourth parameter value may be mainly considered, and the remaining water usage amount is determined based on the limescale accumulation condition. And the ratio between the cumulative water usage after the previous descaling operation and the target water amount corresponding to the third parameter value is capable of indicating the limescale accumulation condition before the water quality parameter changes from the third parameter value to the fourth parameter value, therefore, the remaining water usage amount may be determined based on the ratio between the cumulative water usage after the previous descaling operation and the target water amount corresponding to the third parameter value.

In an optional manner of an embodiment of the present application, determining the remaining water usage amount based on the ratio between the cumulative water usage after the previous descaling operation and the target water amount corresponding to the third parameter value includes:

in response to the ratio between the cumulative water usage after the previous descaling operation and the target water amount corresponding to the third parameter value being not greater than a preset value, determining the remaining water usage amount based on a target water amount corresponding to the fourth parameter value; or
in response to the ratio between the cumulative water usage after the previous descaling operation and the target water amount corresponding to the third parameter value being greater than the preset value, determining the remaining water usage amount based on the target water amount corresponding to the third parameter value.

In an embodiment of the present application, when the ratio between a cumulative water usage after the previous descaling operation and the target water amount corresponding to the third parameter value is not greater than the preset value, indicating that the cumulative water usage is small, and an amount of the limescale accumulation is also small, after switching to a better water quality, a timing for initiating a descaling operation is capable of being delayed. At this time, the remaining water usage amount may be determined based on the target water amount corresponding to the fourth parameter value, that is, the remaining water usage amount is re-determined based on the target water amount in a case of better water quality.

The preset value may be set according to an actual need, for example, the preset value may be 20%.

It may be understood that, when the water quality change condition is that the water quality parameter changes from the third parameter value to the fourth parameter value, and the cumulative water usage after the previous descaling operation is small, the remaining water usage amount re-determined based on the corresponding remaining water usage amount determination manner will be greater than the remaining water usage amount before the water quality change, thereby delaying a timing for initiating a descaling operation, effectively responding to a situation where a generation speed of the limescale slows down, improving a descaling effect, avoiding an adverse effect caused by a blockage of the limescale in a device such as a heater 220, and also extending an interval time between two descaling operations in an operation and a maintenance.

In an embodiment of the present application, when the ratio between the cumulative water usage after the previous descaling operation and the target water amount corresponding to the third parameter value is greater than the preset value, indicating that the cumulative water usage is large, and an amount of the limescale accumulation is also large, at this time, an accumulated limescale easily causes a situation of a blockage of a device such as a heater 220, affecting the normal operation of the beverage machine. To avoid a more accumulation of the limescale and an increase of a failure risk, at this time a remaining water usage amount may be determined based on the target water amount corresponding to the third parameter value, that is, the remaining water usage amount is still determined based on the target water amount in a case of poorer water quality, to ensure that a timing for initiating a descaling operation is capable of being earlier, to avoid the adverse effect caused by the blockage of the limescale in the device such as the heater 220.

It may be understood that, when the water quality change condition is that the water quality parameter changes from the third parameter value to the fourth parameter value, and the cumulative water usage after the previous descaling operation is large, the remaining water usage amount re-determined based on the corresponding remaining water usage amount determination manner will be at least not greater than the remaining water usage amount before the water quality change.

In an optional manner of an embodiment of the present application, determining the remaining water usage amount based on the target water amount corresponding to the fourth parameter value includes:
setting the target water amount corresponding to the fourth parameter value as the remaining water usage amount.

In an embodiment of the present application, when the water quality change condition is that the water quality parameter changes from the third parameter value to the fourth parameter value, and the ratio between the cumulative water usage after the previous descaling operation and the target water amount corresponding to the third parameter value is not greater than the preset value, indicating that the cumulative water usage is small, and an amount of the limescale accumulation is also small, at this time, an accumulated limescale may be ignored, and the target water amount corresponding to the fourth parameter value is directly used as the remaining water usage amount.

For example, a third parameter value is a hardness value of 8, a target water amount corresponding to the third parameter value is 900L. A fourth parameter value is a hardness value of 4, a target water amount corresponding to the fourth parameter value is 1200L, a preset value is 20%, and a cumulative water usage after a previous descaling operation is 100L. In the present example, the ratio between the cumulative water usage of 100L after the previous descaling operation and the target water amount of 900L corresponding to the third parameter value is not greater than the preset value of 20%, at this time, the cumulative water usage may be ignored, and the target water amount of 1200L corresponding to the fourth parameter value is directly used as the remaining water usage amount, that is, if no subsequent water quality change occurs, then a descaling operation may be performed after the remaining water usage amount of 1200L is exhausted.

In an optional manner of an embodiment of the present application, determining the remaining water usage amount based on the target water amount corresponding to the third parameter value includes: determining the remaining water usage amount based on the cumulative water usage after the previous descaling operation and the target water amount corresponding to the third parameter value.

In an embodiment of the present application, when the water quality change condition is that the water quality parameter changes from the third parameter value to the fourth parameter value, and the ratio between the cumulative water usage after the previous descaling operation and the target water amount corresponding to the third parameter value is greater than the preset value, indicating that the cumulative water usage is large, and an amount of the limescale accumulation is also large, at this time the remaining water usage amount may be determined based on the cumulative water usage after the previous descaling operation and the target water amount corresponding to the third parameter value.

As an example, the target water amount corresponding to the third parameter value may be subtracted by the cumulative water usage after the previous descaling operation, and a resulting water amount is used as the remaining water usage amount.

For example, the third parameter value is a hardness value of 8, the target water amount corresponding to the third parameter value is 900L. The fourth parameter value is a hardness value of 4, the target water amount corresponding to the fourth parameter value is 1200L, the preset value is 20%, and the cumulative water usage after the previous descaling operation is 500L. In the present example, the ratio between the cumulative water usage of 500L after the previous descaling operation and the target water amount of 900L corresponding to the third parameter value is greater than the preset value of 20%, at this time, the target water amount of 900L corresponding to the third parameter value may be subtracted by the cumulative water usage of 500L, to obtain a remaining water usage amount of 400L, that is, if no subsequent water quality change occurs, then a descaling operation may be performed after the remaining water usage amount of 400L is exhausted.

In an optional manner of an embodiment of the present application, executing the descaling operation includes:

controlling a first power source 412 of the beverage machine to deliver descaling agent to a water tank 210 of the beverage machine, to mix the descaling agent and solvent in the water tank 210 to form descaling cleaning solution, and controlling a second power source 222 of the beverage machine to deliver the descaling cleaning solution to a main body 320 of the beverage machine to perform the descaling operation; or,
controlling a second power source 222 of the beverage machine to deliver descaling cleaning solution to a main body 320 of the beverage machine to perform the descaling operation; or,
generating and displaying a prompt message for adding descaling agent, in response to determining that the descaling agent has been added to a water tank 210 of the beverage machine, mixing the descaling agent and solvent in the water tank 210 to form descaling cleaning solution, and controlling a second power source 222 of the beverage machine to deliver the descaling cleaning solution to a main body 320 of the beverage machine to perform the descaling operation; or,
generating and displaying a prompt message for adding descaling cleaning solution, in response to determining that the descaling cleaning solution has been added to a water tank 210 of the beverage machine, controlling a second power source 222 of the beverage machine to deliver the descaling cleaning solution to a main body 320 of the beverage machine to perform the descaling operation.

In an embodiment of the present application, when the remaining water usage amount is exhausted, the beverage machine may perform the descaling operation. The descaling operation is for the main body 320, especially for a heater 220 in the main body 320. In the descaling operation, the descaling agent or the descaling cleaning solution needs to be added, and an addition of the descaling agent or the descaling cleaning solution may adopt an automatic addition manner, or may adopt a user manual addition manner.

Wherein, the descaling agent may be a concentrated liquid descaling agent or a solid descaling agent, and when the descaling agent is used, the descaling agent needs to be first mixed with the solvent according to a certain ratio to form the descaling cleaning solution.

As an example, the solvent may be water, the descaling agent may be added to the water tank 210 of the beverage machine, the mixing of the descaling agent and the water is performed in the water tank 210 to form the descaling cleaning solution, and then the descaling cleaning solution is delivered to the main body 320 of the beverage machine for the descaling operation.

In an embodiment of the present application, when an automatic addition manner is adopted to add the descaling agent, a first power source 412 may be provided inside the beverage machine. When the descaling operation needs to be performed, the first power source 412 may be controlled to supply the descaling agent to the water tank 210 of the beverage machine, thereby completing the automatic addition of the descaling agent.

The first power source 412 may include but is not limited to various forms of a conveying mechanism, capable of supplying the descaling agent into the water tank 210, for example, the first power source 412 is configured as a pump, a concentrated liquid descaling agent is stored in a descaling agent storage tank 410, and the first power source 412 is configured to extract the descaling agent from the descaling agent storage tank 410 to the water tank 210.

In an embodiment of the present application, after the descaling agent is automatically added to the water tank 210 and mixed with water to form the descaling cleaning solution, the second power source 222 provided inside the beverage machine may supply the descaling cleaning solution into the main body 320 of the beverage machine for the descaling operation. As an example, the second power source 222 may include but is not limited to a liquid conveying mechanism such as a pump.

The main body 320 may further include a brewing unit 260, and the second power source 222 is further configured to pump water in the water tank 210 into the brewing unit 260, to prepare beverages.

In an embodiment of the present application, when the user manual addition manner is adopted to add the descaling agent, the beverage machine may generate and display the prompt message for adding the descaling agent, to prompt a user to put the descaling agent into the water tank 210. As an example, the prompt message for adding the descaling agent may be displayed through a display screen provided on the beverage machine.

After a user manually puts descaling agent into the water tank 210, the beverage machine may perceive whether the user has already put in the descaling agent through a plurality of manners, for example, a control panel may be displayed on the display screen of the beverage machine, and a wording of "descaling agent has been put in" is displayed on the control panel, so that after the user puts the descaling agent into the water tank 210, the user may trigger the control panel, thereby enabling the beverage machine to perceive that the user has already put in the descaling agent. As another example, the beverage machine may detect a weight change or a liquid level change of the liquid in the water tank 210, to determine whether the user has put in the descaling agent.

After the beverage machine perceives that a user has already put the descaling agent into the water tank 210, after the descaling agent is mixed with water to form the descaling cleaning solution, then the second power source 222 provided inside the beverage machine may supply the descaling cleaning solution into the main body 320 of the beverage machine for the descaling operation.

In an embodiment of the present application, for the convenience of the descaling operation, the descaling cleaning solution may also be directly used in the descaling operation. The descaling cleaning solution may be formed by pre-dilution with the descaling agent, or may be directly used without a dilution.

When the automatic addition manner is adopted to add the descaling cleaning solution, the descaling cleaning solution is stored in a descaling cleaning solution storage tank 310, and the second power source 222 provided inside the beverage machine may supply the descaling cleaning solution into the main body 320 of the beverage machine for descaling operation.

When the user manual addition manner is adopted to add the descaling cleaning solution, the beverage machine may generate and display the prompt message for adding the descaling cleaning solution, to prompt a user to put the descaling cleaning solution into the water tank 210. As an example, the prompt message for adding the descaling cleaning solution may be displayed through a display screen provided on the beverage machine.

After a user manually puts the descaling cleaning solution into the water tank 210, the beverage machine may perceive whether the user has already put in the descaling cleaning solution through a plurality of manners, for example, a control panel may be displayed on a display screen of the beverage machine, and a wording of "descaling cleaning solution has been put in" is displayed on the control, so that after the user puts the descaling cleaning solution into the water tank 210, the user may trigger the control panel, thereby enabling the beverage machine to perceive that the user has already put in the descaling cleaning solution. As another example, the beverage machine may detect a liquid weight change or a liquid level change in the water tank 210, to determine whether the user has put in the descaling cleaning solution.

After the beverage machine perceives that a user has already put the descaling cleaning solution into the water tank 210, the second power source 222 provided inside the beverage machine may supply the descaling cleaning solution into the main body 320 of the beverage machine for the descaling operation.

In an embodiment of the present application, when the automatic addition manner is adopted to add the descaling agent or the descaling cleaning solution, the convenience of a user operation is capable of being improved, and the efficiency of the descaling operation is improved. When the manual addition manner is adopted to add the descaling agent or the descaling cleaning solution, the beverage machine does not need to be configured with the descaling agent storage tank 410

and the first power source 412, or does not need to be configured with the descaling cleaning solution storage tank 310, which is capable of simplifying the structure of the beverage machine and reducing an equipment cost.

In an embodiment of the present application, the descaling operation is executed during an idle period of the beverage machine.

When the automatic addition manner is adopted to add the descaling agent, the descaling operation may be performed during the idle period of the beverage machine, wherein, the idle period may be understood as a period when the beverage machine is not executing a beverage preparation operation or another operation.

By executing the descaling operation during the idle period, an impact on a normal use of the beverage machine by a user is capable of being avoided, and a user experience is improved.

In an optional manner of an embodiment of the present application, the above method further includes: respectively obtaining the water quality parameter of the water inside the beverage machine before and after the descaling operation, and in response to a water quality indicated by the water quality parameter of the water inside the beverage machine before the descaling operation being more favorable than a water quality indicated by the water quality parameter of the water inside the beverage machine after the descaling operation, executing at least one cleaning operation .

In an embodiment of the present application, after executing the descaling operation, at least a part of limescale inside the beverage machine will be removed, which will optimize the water quality inside the beverage machine. At this time, the water quality is indicated by the water quality parameter of the water inside the beverage machine after the descaling operation should be more favorable than the water quality of the water inside the beverage machine before the descaling operation.

And when it is detected that the water quality before the descaling operation is more favorable than the water quality after the descaling operation, it may be considered that the descaling cleaning solution still remains in the main body 320 of the beverage machine after the descaling operation, and the water quality is affected due to the presence of the residual descaling cleaning solution. At this time, at least one cleaning operation may be executed, so that the residual descaling cleaning solution inside the beverage machine is removed, to avoid an impact on the water quality.

Wherein, the water quality parameter of the water inside the beverage machine before the descaling operation is obtained at a moment before the descaling operation, that is, when executing the descaling operation, first the water quality parameter of the water inside the beverage machine before the descaling operation is obtained, then the descaling operation is executed, and after executing the descaling operation, the water quality parameter of the water inside the beverage machine after the descaling operation is obtained again, and the water quality parameter of the water inside the beverage machine before the descaling operation and the water quality parameter of the water inside the beverage machine after the descaling operation are compared.

In an optional manner of an embodiment of the present application, the above method further includes: in response to the water quality parameter not meeting a preset water quality condition, generating and displaying a prompt message for replacing a filter cartridge in a water tank 210 or a prompt message for replacing a water source.

In an embodiment of the present application, when it is detected that the water quality parameter does not meet the preset water quality condition, indicating that the current water quality condition is poor, which may affect the normal operation of the beverage machine or the quality of dispensed beverages, timely treatment is needed to improve the water quality condition. At this time, the prompt message for replacing the filter cartridge in the water tank 210 or the prompt message for replacing a direct water source 250 may be issued.

When the beverage machine is supplied with water from the water tank 210, the filter cartridge is configured to filter an impurity in the water in the water tank 210 to improve the water quality. When the filter cartridge in the water tank 210 has an aging or other situation, the filtering capability of the filter cartridge for the water decreases, and the filter cartridge is unable to achieve an effect of improving the water quality, which may lead to a situation where the water quality parameter does not meet a preset water quality condition. At this time, the prompt message for replacing the filter cartridge in the water tank 210 may be sent to a user, to prompt the user to replace the filter cartridge in the water tank 210, to improve the water quality.

When the beverage machine is supplied with water from a direct water source 250, if it is detected that the water quality of the current direct water source 250 is poor, then the prompt message for replacing the direct water source 250 may be sent to a user, prompting the user to replace it with a high-quality direct water source 250, to improve a situation of poor water quality.

In an optional manner of an embodiment of the present application, the above method further includes: in response to a detection device 230 provided in the beverage machine detecting that the temperature of water is lower than a preset value, supplying heated water into a brewing unit 260 of the beverage machine to preheat the brewing unit 260, and the detection device 230 is also configured to detect the water quality parameter.

In an embodiment of the present application, the water quality parameter is detected by the detection device 230 provided in the beverage machine. The detection device 230 may also integrate a temperature detection function, for detecting the temperature of the water inside the beverage machine.

As an example, a detection device 230 is configured as a TDS detection probe, which is capable of detecting a TDS value and a temperature value.

The preset value is a low temperature value, which is far lower than an expected temperature of dispensed beverages, and when it is detected that the temperature of water is lower than the preset value, indicating that the water needs to be heated relatively sufficiently to reach the above expected temperature, and during a startup phase of the beverage machine, an environment such as an internal pipeline will cause a heat loss, which makes a first cup of beverage output by the beverage machine possibly unable to reach the expected temperature.

In an embodiment of the present application, by preheating the brewing unit 260, a part of heat loss is capable of being compensated, which is helpful to improve the output temperature of the first cup of beverage.

As an example, the preheating operation may specifically be heating the water through the heater 220 provided in the beverage machine, and supplying the heated water to the brewing unit 260, to achieve the preheating of the brewing unit 260.

In an optional manner of an embodiment of the present application, the water quality parameter includes: one or more of Total Dissolved Solids (TDS), water hardness, hydrogen ion concentration index (pH value), and conductivity.

In an embodiment of the present application, the water quality parameter may be a parameter that affects the limescale generation, and may include but is not limited to TDS, water hardness, pH value, or conductivity.

In an optional manner of an embodiment of the present application, in response to the water quality parameter including a TDS value, a determination manner for the target water amount is:

determining a water hardness value based on a first preset calculation rule and the TDS value, and the first preset calculation rule indicates that the TDS value is positively correlated with the water hardness value; and
determining the target water amount based on a second preset calculation rule and the water hardness value, and the second preset calculation rule indicates that the water hardness value is negatively correlated with the target water amount.

In an embodiment of the present application, the water quality parameter may specifically be TDS, and the water hardness may be determined based on the value of the TDS, and then the target water amount is determined based on the water hardness.

A first preset calculation rule is configured to indicate that the TDS value is positively correlated with the water hardness value. As an example, the first preset calculation rule may be indicated by the following formula one.

$$FGH = X \times FTDS + Y;$$

wherein, FGH indicates the water hardness value, FTDS indicates the TDS value, and X and Y are both constants, and a specific value of X and Y may be determined according to a specific situation.

As another example, the first preset calculation rule may also indicate a correspondence relationship among the temperature value, the TDS value, and the water hardness value, and the correspondence relationship may be determined by a manner of respectively measuring the TDS value and the water hardness value under a different temperature value. Based on the TDS value and the temperature value of the water inside the beverage machine, and based on the correspondence relationship, the water hardness value is capable of being determined.

A second preset calculation rule is used to indicate that a water hardness value is negatively correlated with the target water amount. As an example, the second preset calculation rule may be indicated by the following formula two.

$$V = a \times (b - FGH) + c; \text{ formula two;}$$

wherein, V indicates the target water amount, FGH indicates the water hardness value, and a, b, and c are all constants, and a specific value of a, b, and c may be determined according to a specific situation.

As another example, the second preset calculation rule may also indicate a correspondence relationship between the water hardness value and the target water amount, and based on the correspondence relationship and the water hardness value of the water inside the beverage machine, the target water amount is capable of being determined.

In an optional manner of an embodiment of the present application, a mapping relationship between a plurality of water quality parameters and a plurality of remaining water usage amounts includes: determining the remaining water usage amount based on the water quality parameter, wherein, the water quality parameter is negatively correlated with the remaining water usage amount.

Exemplarily, the plurality of water quality parameters and the plurality of remaining water usage amounts have a one-to-one correspondence relationship, exemplarily, the plurality of water quality parameters may include a fifth parameter value and a sixth parameter value, wherein, both the fifth parameter value and the sixth parameter value are a numerical value of the water quality parameter, the remaining water usage amount corresponding to the fifth parameter value is greater than the remaining water usage amount corresponding to the sixth parameter value; wherein, the water quality indicated by the fifth parameter value is more favorable than the water quality indicated by the sixth parameter value.

Wherein, a water quality parameter and a remaining water usage amount will have a certain relationship. Specifically, the formation speed of limescale in a case of better water quality will be slower than the formation speed of limescale in a case of poorer water quality, therefore, when a degree of an accumulation of the limescale reaches a condition that needs to be removed, the usage amount of water with the better water quality required will be greater than the usage amount of water with the poorer water quality. Therefore, in the mapping relationship between the parameter value of the water quality parameter and the remaining water usage amount, the remaining water usage amount corresponding to the water quality parameter indicating the better water quality (such as the fifth parameter value) may be specified to be higher than the remaining water usage amount corresponding to the water quality parameter indicating the poorer water quality (such as the sixth parameter value).

For example, the water quality parameter is the water hardness. When the water hardness is in a range of 1-5, a corresponding remaining water usage amount is set to 1200L. When the water hardness is in a range of 6-10, a corresponding remaining water usage amount is set to 900L.

In an optional manner of an embodiment of the present application, obtaining the water quality parameter of the water inside the beverage machine includes:

during an operation of the beverage machine, in response to monitoring a water quality detection initiation event, controlling a detection device 230 inside the beverage machine to collect the water quality parameter of the water inside the beverage machine;

wherein, the water quality detection initiation event includes at least one of a water source switching event and an event of a specified function command. Wherein, the water quality detection initiation event is one or more pre-set events, and when the water quality detection initiation event occurs, the detection device 230 may be controlled to collect the water quality parameter, to achieve a water quality detection.

The water source switching event is an event initiated after a water source inside the beverage machine is switched. If the water source switching event is monitored, indicating that the water source inside the beverage machine has been switched, and the water quality before and after the water source switching may change, to timely detect the water quality change condition, the detection device 230 may be controlled to collect the water quality parameter when the water source switching event is monitored.

The specified function command is configured to initiate one or more specific functions inside the beverage machine, and these specific functions may cause the water quality inside the beverage machine to change. At this time, it may also be necessary to perceive the water quality inside the beverage machine. To timely detect the water quality change condition, when the event of the specified function command is monitored, the detection device 230 may be controlled to collect the water quality parameter, to achieve water quality detection.

In an embodiment of the present application, an event monitoring mechanism may be established inside the beverage machine, and when the water quality detection initiation event occurs, the water quality detection initiation event may be monitored, thereby initiating the detection device 230 to timely detect the water quality parameter.

In a prior art, most beverage machines do not have a function of autonomous water quality detection, but require an operator to manually perform the water quality detection, and then input a manually detected water quality parameter into the beverage machine, and this manner relying on manual acquisition has a cumbersome operation and a poor accuracy.

In a prior art, in order to improve an operational convenience and an accuracy of a detection result, some beverage machines provide a built-in water quality detector in the machine, to detect the water quality of the beverage machine in real-time, that is, a water quality detection is performed once every time interval, and when the time interval is small, a frequent water quality detection will consume more resources and computing power; when the time interval is large, although the resources and the computing power consumed by the water quality detection may be saved, it easily leads to a certain lag in a perception of the water quality condition by the beverage machine, and an inability to timely perceive the water quality change.

The method provided by an embodiment of the present application, monitors the water quality detection initiation event, and when the water quality detection initiation event is monitored, controls the detection device 230 inside the beverage machine to collect the water quality parameter of the water inside the beverage machine. Based on the present embodiment, the water quality detection is capable of being performed when the water quality detection initiation event is monitored, a key timing for the water quality detection will not be missed, the water quality is capable of being ensured, and a too frequent water quality detection is also capable of being avoided, saving a resource and a computing power.

In an optional embodiment of the present application, the water source switching event includes:

a water tank replacement event, or,
a water tank refilling event, or,
a bottled water source switching event, or,

a direct water source switching event.

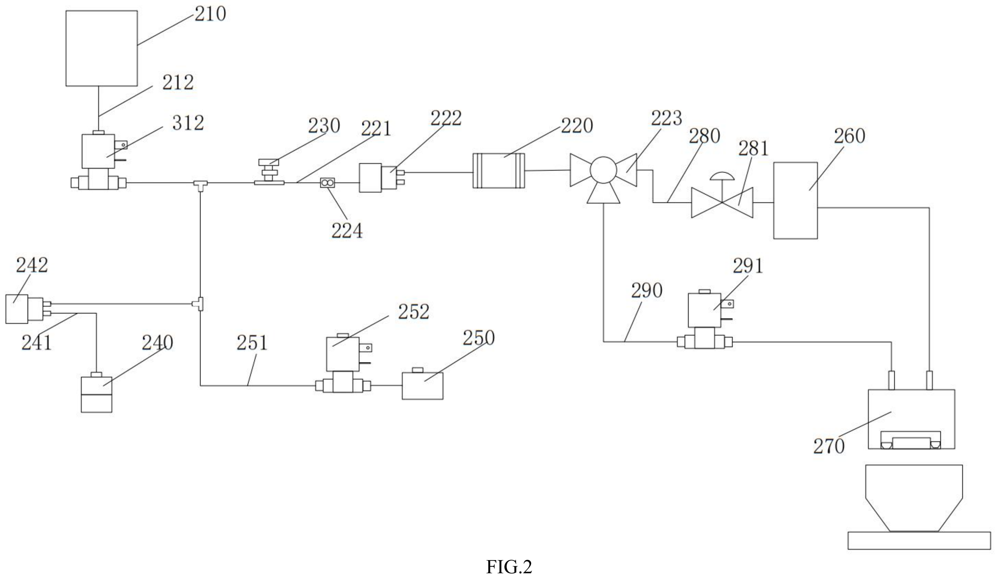

In an embodiment of the present application, referring to FIG. 2 to FIG. 4, the beverage machine may include a main body 320, and the main body 320 may include beverage preparation devices, such as a heater 220 and a brewing unit 260, and generally a bottled water source 240, a direct water source 250, or a water tank 210 is configured to supply water to the main body 320.

Specifically, when the beverage machine supplies water from the water tank 210 to the main body 320, if the water tank replacement event is monitored, indicating that the water tank 210 inside the beverage machine has been replaced, the environment inside the water tank 210 will change before and after the replacement, and the water inside the water tank 210 will also be replaced, which may cause the water quality to change. Therefore, when the water tank 210 replacement event is monitored, the detection device 230 may be controlled to collect the water quality parameter of the water inside the beverage machine.

The quantity of water stored in the water tank 210 will decrease as it is consumed, and when the remaining water amount in the water tank 210 is small, the water tank 210 needs to be refilled. If the water tank refilling event is monitored, indicating that new water has been added to the water tank 210, and the added new water may cause the water quality to change, therefore, when the water tank refilling event is monitored, the detection device 230 may be controlled to collect the water quality parameter of the water inside the beverage machine.

When the beverage machine supplies water from the bottled water source 240, after the bottled water source 240 is exhausted, the bottled water source 240 needs to be replaced. If the bottled water source switching event is monitored, indicating that the bottled water source 240 has been switched, and the water quality of the bottled water source 240 after a switching may change, therefore, when the bottled water source switching event is monitored, the detection device 230 may be controlled to collect the water quality parameter of the water inside the beverage machine.

When a beverage machine supplies water from the direct water source 250, if the direct water source switching event is monitored, indicating that the direct water source 250 used by the beverage machine has been switched, the water quality of a different direct water source 250 may be different, causing the water quality to change. Therefore, when the direct water source switching event is monitored, the detection device 230 may be controlled to collect the water quality parameter of the water inside the beverage machine.

In an optional embodiment of the present application, the specified function command includes:

   a power-on command, or,
   a command for completion of the descaling operation, or,
   a command for periodic water quality detection.

Wherein, a user may control the beverage machine to power on by initiating the power-on command, and after the beverage machine is powered on, the water quality inside the beverage machine needs to be timely perceived, therefore, when the power-on command is detected, the detection device 230 may be controlled to collect the water quality parameter of the water inside the beverage machine.

The descaling operation is configured to eliminate the limescale inside the beverage machine, and after the descaling operation is completed, the water quality inside the beverage machine may change, therefore when the command for the completion of the descaling operation is monitored, the detection device 230 may be controlled to collect the water quality parameter of the water inside the beverage machine.

In an embodiment of the present application, a command for periodic water quality detection may also be automatically generated every fixed duration, to control the detection device 230 to collect the water quality parameter of the water inside a beverage machine, to achieve periodic detection of the water quality inside the beverage machine.

An embodiment of the present application also provides a beverage machine, the beverage machine including:

   a detection device 230, configured to automatically obtain the water quality parameter of the water inside the beverage machine; and
   a controller, in communication connection with the detection device 230, wherein the controller is configured to execute the above method for descaling the beverage machine.

Wherein, the detection device 230 is configured to collect the water quality parameter of the water inside the beverage machine. A corresponding detection device 230 may be set according to a type of the water quality parameter required to be collected, for example, when the water quality parameter is water hardness, the corresponding detection device 230 is configured as a TDS detection probe, the TDS detection probe detects to obtain a TDS value, and then a preset conversion algorithm is used to convert the TDS value to a water hardness value.

The controller may execute the above method for descaling the beverage machine, and determine a remaining water usage amount based on at least one of the water quality parameter and the water quality change condition, thereby executing the descaling operation when the remaining water usage amount reaches zero.

In an optional embodiment of the present application, the beverage machine further includes a water supply source, and a heater 220 disposed downstream of the water supply source, and the detection device 230 is disposed between the water supply source and the heater 220; and

the water supply source includes at least one of a water tank 210, a first water supply pipeline 241, and a second water supply pipeline 251, wherein, the first water supply pipeline 241 is connected to a bottled water source 240, and the second water supply pipeline 251 is connected to a direct water source 250.

In an embodiment of the present application, by disposing the detection device 230 between the water source and the heater 220, the water quality detection of water supplied from a water supply source is achieved. The detection device 230 is disposed upstream of the heater 220, the detection device 230 may detect normal temperature water supplied from the water supply source, and a detection result of the water quality detection is more accurate, and if the detection device 230 is disposed downstream of the heater 220, a high-temperature water heated by the heater 220 will affect the detection result of the water quality detection.

The beverage machine may supply water by a plurality of manners, such as the bottled water source 240, the direct water source 250, or the water tank 210. Specifically, at least one of the first water supply pipeline 241 connected to the bottled water source 240, the second water supply pipeline 251 connected to the direct water source 250, and the water tank 210 may be configured as the water supply source of the beverage machine.

As an example, FIG. 2 is a water path diagram inside the beverage machine provided by an embodiment of the present application.

As shown in FIG. 2, a plurality of water supply pipelines may be provided inside the beverage machine, to meet the requirement for connecting a plurality of water supply sources such as the water tank 210, the bottled water source 240, and the direct water source 250.

Wherein, the first water supply pipeline 241 is connected to the bottled water source 240.

In the present example, a third power source 242 may also be provided on the first water supply pipeline 241, for extracting the water in the bottled water source 240, and a specific type of the third power source 242 may include but is not limited to a diaphragm pump. When the diaphragm pump is not started, the water inside the bottled water source 240 is unable to pass through the diaphragm pump, which also causes the first water supply pipeline 241 to be disconnected. When the diaphragm pump is started, the water inside the bottled water source 240 is able to pass through the diaphragm pump, which also causes the first water supply pipeline 241 to be connected.

The water tank 210 may be connected to a third water supply pipeline 212. In the present example, a control valve 312 may also be provided on the third water supply pipeline 212, for controlling the connection and the disconnection of the third water supply pipeline 212, as shown in FIG. 2.

The second water supply pipeline 251 is connected to the direct water source 250. In the present example, a second solenoid valve 252 may also be provided on the second water supply pipeline 251, for controlling the connection and the disconnection of the second water supply pipeline 251.

By controlling the connection and the disconnection of the first water supply pipeline 241, the second water supply pipeline 251, and the third water supply pipeline 212, the water supply source is capable of being switched among the first water supply pipeline 241, the second water supply pipeline 251, and the water tank 210.

The detection device 230 is disposed between the water supply source and the heater 220. Specifically, the heater 220 may be connected to a heater water supply pipeline 221, and the heater water supply pipeline 221 is respectively connected to the first water supply pipeline 241, the second water supply pipeline 251, and the third water supply pipeline 212. The detection device 230 is disposed on the heater water supply pipeline 221. A second power source 222 may also be provided on the heater water supply pipeline 221, and the second power source 222 is configured to supply water into the heater 220. The second power source 222 is disposed downstream of the detection device 230. As an example, the second power source 222 may include but is not limited to a liquid conveying mechanism such as a pump.

In the present example, a flow meter 224 may be provided between the detection device 230 and the second power source 222, for calculating a quantity of water flowing into the main body, for example, calculating the remaining water usage amount.

In the present example, the output end of the heater 220 may be connected to a diverter valve 223, and the diverter valve 223 is respectively connected to a hot water output pipeline 290 and a brewing unit water supply pipeline 280, for controlling the connection and the disconnection of the hot water output pipeline 290 and the brewing unit water supply pipeline 280. Both the hot water output pipeline 290 and the brewing unit water supply pipeline 280 are connected to an output mechanism 270 of the beverage machine.

After water is supplied into the heater 220 for heating, hot water is capable of being output, and the hot water output pipeline 290 is configured to output the hot water output from the heater 220 through a hot water outlet of the output mechanism 270. The brewing unit water supply pipeline 280 is configured to deliver hot water output from the heater 220 to the brewing unit 260 for beverage brewing, and after the brewing is completed, output the prepared beverage through the beverage outlet of the output mechanism 270.

The hot water output pipeline 290 may also be provided with a third solenoid valve 291, for controlling a connection and the disconnection of the hot water output pipeline 290.

The brewing unit water supply pipeline 280 may also be provided with a drain valve 281, for draining residual liquid in the brewing unit water supply pipeline 280 and the brewing unit 260.

In an optional embodiment of the present application, the beverage machine has at least one of the following features:

the beverage machine includes a water tank 210, a main body 320, and a cleaning solution supply pipeline 311, a control valve 312 is disposed between the water tank 210 and the main body 320, and the control valve 312 is operable to control fluid connection between the water tank 210 and the main body 320, or fluid connection between the cleaning solution supply pipeline 311 and the main body 320, wherein, the cleaning solution supply pipeline 311 is configured to deliver descaling cleaning solution to the main body 320; and

the beverage machine includes a water tank 210, a first power source 412, and a descaling agent supply pipeline 411, the descaling agent supply pipeline 411 is disposed upstream of the water tank 210, and the first power source 412 is disposed on the descaling agent supply pipeline 411, wherein, the descaling agent supply pipeline 411 is configured to deliver descaling agent to the water tank 210.

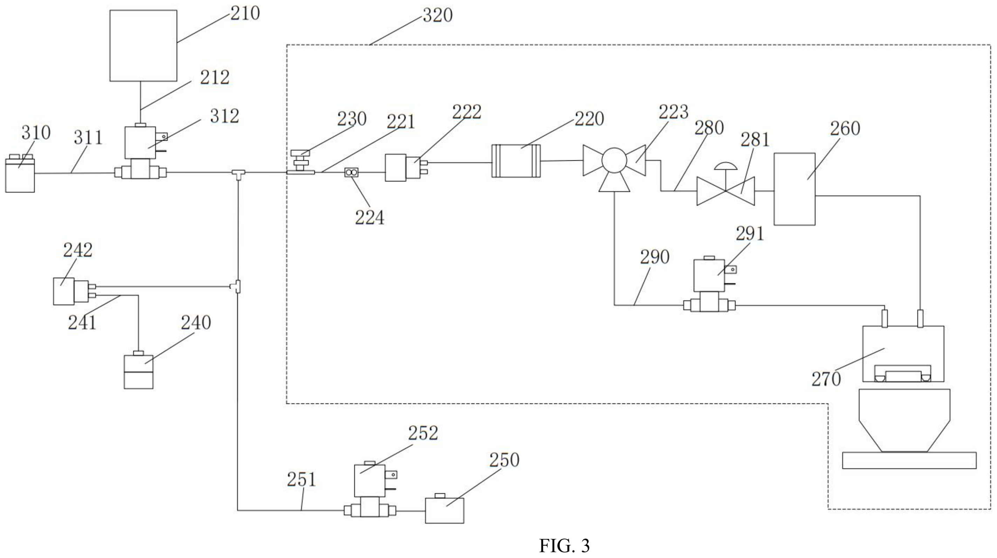

Wherein, as shown in FIG. 3, when the control valve 312 controls fluid connection between the water tank 210 and the main body 320. The water tank 210 may serve as a water supply source to supply water to the main body 320. The cleaning solution supply pipeline 311 may be connected to a descaling cleaning solution storage tank 310, and when the control valve 312 controls fluid connection between the cleaning solution supply pipeline 311 and the main body 320, the cleaning solution supply pipeline 311 may supply the descaling cleaning solution in the descaling cleaning solution storage tank 310 into the main body 320.

As an example, FIG. 3 is another water path diagram inside the beverage machine provided by an embodiment of the present application.

As shown in FIG. 3, the main body 320 may include an internal component of a beverage machine other than a water tank 210, a first water supply pipeline 241, and a second water supply pipeline 251. The descaling cleaning solution is stored in a descaling cleaning solution storage tank 310, and the descaling cleaning solution storage tank 310 is connected to a cleaning solution supply pipeline 311. A control valve 312 is capable of controlling fluid connection and the disconnection between the water tank 210 and the main body 320, and is capable of controlling the fluid connection and the disconnection between the cleaning solution supply pipeline 311 and the main body 320.

When the control valve 312 controls the disconnection between the water tank 210 and the main body 320, and controls fluid connection between the cleaning solution supply pipeline 311 and the main body 320, under the power action of the second power source 222, the cleaning solution supply pipeline 311 may deliver the descaling cleaning solution in the descaling cleaning solution storage tank 310 into the main body 320. In the present example, a power for delivering the descaling cleaning solution may be provided by the second power source 222.

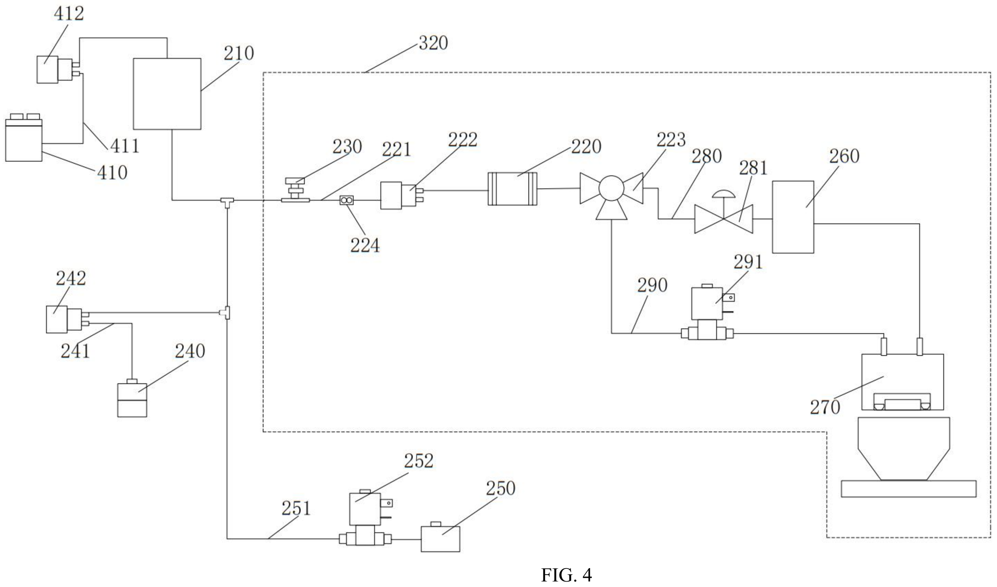

As another optional manner, as shown in FIG. 4, the descaling agent supply pipeline 411 may be disposed upstream of the water tank 210, the first power source 412 is disposed on the descaling agent supply pipeline 411, for delivering the descaling agent to the water tank 210, after the descaling agent is mixed with the water in the water tank 210, the descaling cleaning solution is formed, and the second power source 222 may deliver the descaling cleaning solution in the water tank 210 to the main body 320 for the descaling operation.

As an example, FIG. 4 is yet another water path diagram inside the beverage machine provided by an embodiment of the present application.

As shown in FIG. 4, descaling agent is stored in a descaling agent storage tank 410, a descaling agent supply pipeline 411 connects the descaling agent storage tank 410 and a water tank 210, and a first power source 412 may be disposed on the descaling agent supply pipeline 411, and under an action of the first power source 412, the descaling agent in the descaling agent storage tank 410 is capable of being delivered to the water tank 210.

In the present example, the descaling agent may be concentrated liquid descaling agent, and the first power source 412 may include but is not limited to a liquid conveying mechanism such as a pump.

It should be understood that, although each step in a flowchart of a drawing is displayed sequentially according to an arrow, these steps are not necessarily executed sequentially in an order indicated by the arrow. Unless explicitly stated herein, an execution of these steps is not strictly limited in order, and the steps may be executed in another order. Moreover, at least a part of the steps in the flowchart of the drawing may include a plurality of sub-steps or a plurality of stages, and these sub-steps or stages are not necessarily executed and completed at the same moment, but may be executed at a different moment, and an execution order of the sub-steps or stages is not necessarily sequential, but may be executed alternately or in rotation with at least a part of another step or a sub-step or a stage of the other step.

The above descriptions are only a part of embodiments of the present invention. It should be pointed out that, for a person of ordinary skill in the art, several improvements and modifications may also be made without departing from a principle of the present invention, and these improvements and modifications should also be considered within the protection scope of the present invention.

**Claims**

1. A method for descaling a beverage machine, **characterized in that**, the method comprises:

   obtaining a water quality parameter of the water inside the beverage machine, wherein the water quality parameter is automatically obtained;
   determining a remaining water usage amount based on the water quality parameter and a preset descaling rule;
   executing a descaling operation when the remaining water usage amount reaches zero;
   wherein the preset descaling rule indicates at least one of the following two mapping relationships:

   a mapping relationship between a plurality of water quality parameters and a plurality of remaining water usage amounts; and
   a mapping relationship between a plurality of water quality change conditions and a plurality of remaining water usage amount determination manners.

2. The method according to claim 1, wherein a predetermined mapping relationship is established between a plurality of parameter values of the water quality parameter and a respective plurality of target water amounts; and wherein the mapping relationship between the plurality of water quality change conditions and the plurality of remaining water usage amount determination manners comprises:
   in response to the water quality change condition being that the water quality parameter changes from a first parameter value to a second parameter value, a corresponding remaining water usage amount determination manner is: determining the remaining water usage amount based on a target water amount corresponding to the second parameter value;
   wherein when the first parameter value indicates a more favorable water quality than a water quality indicated by the second parameter value, the target water amount corresponding to the second parameter value is less than the target water amount corresponding to the first parameter value.

3. The method according to claim 2, wherein the determining the remaining water usage amount based on the target water amount corresponding to the second parameter value comprises:

   obtaining a cumulative water usage after a previous descaling operation; and
   determining the remaining water usage amount based on the target water amount corresponding to the second parameter value and the cumulative water usage.

4. The method according to claim 1, wherein a predetermined mapping relationship is established between a plurality of parameter values of the water quality parameter and a plurality of target water amounts; and wherein the mapping relationship between the plurality of water quality change conditions and the plurality of remaining water usage amount determination manners comprises:

   in response to a water quality change condition being that the water quality parameter changes from a third parameter value to a fourth parameter value, a corresponding remaining water usage amount determination manner is: determining the remaining water usage amount based on a ratio between a cumulative water usage after a previous descaling operation and the target water amount corresponding to the third parameter value;
   wherein the fourth parameter value indicates a more favorable water quality than a water quality indicated by the third parameter value, the target water amount corresponding to the fourth parameter value is greater than the target water amount corresponding to the third parameter value.

5. The method according to claim 4, wherein the determining the remaining water usage amount based on the ratio between the cumulative water usage after the previous descaling operation and the target water amount corresponding to the third parameter value comprises:

   in response to the ratio between the cumulative water usage after the previous descaling operation and the target water amount corresponding to the third parameter value being not greater than a preset value, determining the remaining water usage amount based on the target water amount corresponding to the fourth parameter value; or
   in response to the ratio between the cumulative water usage after the previous descaling operation and the target water amount corresponding to the third parameter value being greater than the preset value, determining the remaining water usage amount based on the target water amount corresponding to the third parameter value.

6. The method according to claim 5, wherein the determining the remaining water usage amount based on the target water amount corresponding to the fourth parameter value comprises:
   setting the target water amount corresponding to the fourth parameter value as the remaining water usage amount.

7. The method according to claim 5, wherein the determining the remaining water usage amount based on the target water amount corresponding to the third parameter value comprises:
determining the remaining water usage amount based on the cumulative water usage after the previous descaling operation and the target water amount corresponding to the third parameter value.

8. The method according to any one of claims 1-7, wherein the executing the descaling operation comprises:

controlling a first power source (412) of the beverage machine to deliver descaling agent to a water tank (210) of the beverage machine, to mix the descaling agent and solvent in the water tank (210) to form descaling cleaning solution, and controlling a second power source (222) of the beverage machine to deliver the descaling cleaning solution to a main body (320) of the beverage machine to perform the descaling operation; or,
controlling a second power source (222) of the beverage machine to deliver descaling cleaning solution to a main body (320) of the beverage machine to perform the descaling operation; or,
generating and displaying a prompt message for adding descaling agent, in response to determining that the descaling agent has been added to a water tank (210) of the beverage machine, mixing the descaling agent and solvent in the water tank (210) to form descaling cleaning solution, and controlling a second power source (222) of the beverage machine to deliver the descaling cleaning solution to a main body (320) of the beverage machine to perform the descaling operation; or,
generating and displaying a prompt message for adding descaling cleaning solution, in response to determining that the descaling cleaning solution has been added to a water tank (210) of the beverage machine, controlling a second power source (222) of the beverage machine to deliver the descaling cleaning solution to a main body (320) of the beverage machine to perform the descaling operation.

9. The method according to any one of claims 1-7, wherein the method further comprises at least one of the following:

respectively obtaining the water quality parameter of the water inside the beverage machine before and after the descaling operation, and in response to a water quality indicated by the water quality parameter of the water inside the beverage machine before the descaling operation being more favorable than a water quality indicated by the water quality parameter of the water inside the beverage machine after the descaling operation, executing at least one cleaning operation;
in response to the water quality parameter not meeting a preset water quality condition, generating and displaying a prompt message for replacing a filter cartridge in a water tank or a prompt message for replacing a water source;
in response to a detection device (230) provided in the beverage machine detecting that the temperature of water is lower than a preset value, supplying heated water into a brewing unit of the beverage machine to preheat the brewing unit, wherein the detection device (230) is further configured to detect the water quality parameter; and
the descaling operation is executed during an idle period of the beverage machine; and during a beverage preparation by the beverage machine, hot water output from a heater is delivered to a brewing unit through a brewing unit water supply pipeline for beverage preparation.

10. The method according to claim 2, wherein the water quality parameter comprises one or more of: Total Dissolved Solids (TDS), water hardness, hydrogen ion concentration index, and conductivity;
wherein, in response to the water quality parameter comprising a TDS value, the determination manner for the target water amount is:

determining a water hardness value based on a first preset calculation rule and the TDS value, wherein the first preset calculation rule indicates that the TDS value is positively correlated with the water hardness value; and
determining the target water amount based on a second preset calculation rule and the water hardness value, wherein the second preset calculation rule indicates that the water hardness value is negatively correlated with the target water amount.

11. The method according to any one of claims 1-7, wherein the mapping relationship between the plurality of water quality parameters and the plurality of remaining water usage amounts comprises: determining the remaining water usage amount based on the water quality parameter, wherein the water quality parameter is negatively correlated with the remaining water usage amount.

12. The method according to any one of claims 1-7, wherein the obtaining the water quality parameter of the water inside the beverage machine comprises:

during an operation of the beverage machine, in response to monitoring a water quality detection initiation event, controlling a detection device (230) inside the beverage machine to collect the water quality parameter of the water inside the beverage machine; wherein the water quality detection initiation event comprises at least one of the following events: a water source switching event, an event of a specified function command;

preferably, the water source switching event comprises: a water tank replacement event, or a water tank refilling event, or a bottled water source switching event, or a direct water source switching event;

preferably, the specified function command comprises: a power-on command, or a command for completion of the descaling operation, or a command for periodic water quality detection.

13. A beverage machine, wherein the beverage machine comprises:

a detection device (230), configured to automatically obtain a water quality parameter of the water inside the beverage machine; and
a controller, in a communication connection with the detection device (230), **characterized in that**, the controller is configured to execute the method for descaling the beverage machine according to any one of claims 1-12.

14. The beverage machine according to claim 13, wherein the beverage machine further comprises a water supply source, and a heater (220) disposed downstream of the water supply source, and the detection device (230) is disposed between the water supply source and the heater (220); and
the water supply source comprises at least one of a water tank (210), a first water supply pipeline (241), and a second water supply pipeline (251), wherein the first water supply pipeline (241) is connected to a bottled water source (240), and the second water supply pipeline (251) is connected to a direct water source (250).

15. The beverage machine according to claim 13, wherein the beverage machine has at least one of the following features:

the beverage machine comprises a water tank (210), a main body (320), and a cleaning solution supply pipeline (311), a control valve (312) is disposed between the water tank (210) and the main body (320), and the control valve (312) is operable to control fluid connection between the water tank (210) and the main body (320), or fluid connection between the cleaning solution supply pipeline (311) and the main body (320), wherein the cleaning solution supply pipeline (311) is configured to deliver descaling cleaning solution to the main body (320); and
the beverage machine comprises a water tank (210), a first power source (412), and a descaling agent supply pipeline (411), the descaling agent supply pipeline (411) is disposed upstream of the water tank (210), and the first power source (412) is disposed on the descaling agent supply pipeline (411), wherein the descaling agent supply pipeline (411) is configured to deliver descaling agent to the water tank (210).

obtaining a water quality parameter of the water inside the beverage machine, wherein the water quality parameter is automatically obtained — S110

determining a remaining water usage amount based on the water quality parameter and a preset descaling rule, wherein the preset descaling rule indicates at least one of the following two mapping relationships:
a mapping relationship between a plurality of water quality parameters and a plurality of remaining water usage amounts; and
a mapping relationship between a plurality of water quality change conditions and a plurality of remaining water usage amount determination manners — S120

executing a descaling operation when the remaining water usage amount reaches zero — S130

FIG. 1

FIG.2

FIG. 3

EP 4 778 432 A1

FIG. 4

**EP 4 778 432 A1**

<table>
<tr><td colspan="4" align="center">**EUROPEAN SEARCH REPORT**</td><td>**Application Number**<br>**EP 26 15 1029**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 289 687 A (QINGDAO ECONOMIC & TECH DEV ZONE HAIER WATER HEATER CO LTD ET AL.) 4 November 2022 (2022-11-04) * paragraph [0004] - paragraph [0029] * ----- | 1-15 | INV.<br>A47J31/60 |
| A | EP 4 417 093 A1 (BSH HAUSGERAETE GMBH [DE]) 21 August 2024 (2024-08-21) * paragraph [0022] - paragraph [0031] * ----- | 1-15 | |
| A | AU 2018 316 441 A1 (FRANKE KAFFEEMASCHINEN AG [CH]) 13 February 2020 (2020-02-13) * claims 1-7; figure 1 * ----- | 1-15 | |

|  |  |
|---|---|
|  | TECHNICAL FIELDS SEARCHED (IPC) |
|  | A47J |

The present search report has been drawn up for all claims

| Place of search | Date of completion of the search | Examiner |
|---|---|---|
| Munich | 29 May 2026 | Vuc, Arianda |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

22

## ANNEX TO THE EUROPEAN SEARCH REPORT
## ON EUROPEAN PATENT APPLICATION NO.

EP 26 15 1029

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2026

| Patent document cited in search report | | Publication date | Patent family member(s) | | Publication date |
|---|---|---|---|---|---|
| CN 115289687 | A | 04-11-2022 | NONE | | |
| EP 4417093 | A1 | 21-08-2024 | DE 102023201353 A1 | | 22-08-2024 |
| | | | EP 4417093 A1 | | 21-08-2024 |
| AU 2018316441 | A1 | 13-02-2020 | AU 2018316441 A1 | | 13-02-2020 |
| | | | BR 112020003060 A2 | | 25-08-2020 |
| | | | CA 3070907 A1 | | 21-02-2019 |
| | | | CN 110996733 A | | 10-04-2020 |
| | | | DE 102017118598 A1 | | 21-02-2019 |
| | | | DK 3668358 T3 | | 06-02-2023 |
| | | | EP 3668358 A1 | | 24-06-2020 |
| | | | ES 2938484 T3 | | 11-04-2023 |
| | | | JP 7003226 B2 | | 20-01-2022 |
| | | | JP 2020531092 A | | 05-11-2020 |
| | | | KR 20200042495 A | | 23-04-2020 |
| | | | TW 201909800 A | | 16-03-2019 |
| | | | US 2021030197 A1 | | 04-02-2021 |
| | | | WO 2019034374 A1 | | 21-02-2019 |
| | | | ZA 202000843 B | | 29-06-2022 |

EPO FORM P0459

For more details about this annex : see Official Journal of the European Patent Office, No. 12/82